# EUROPÄISCHE PATENTANMELDUNG

(11) **EP 1 629 753 A1**
(43) Veröffentlichungstag der Anmeldung: **01.03.2006**
(21) Anmeldenummer: 05017467.1
(22) Anmeldetag: 11.08.2005
(51) Int. Cl.: A47J 37/07

(54) **Grillvorrichtung**

(30) Priorität: 23.08.2004 DE 202004013359 U
(71) Anmelder: Buchholz, Harald, 21397 Barendorf (DE); Hafer, Jörg, 21397 Barendorf (DE)
(72) Erfinder: Buchholz, Harald, 21397 Barendorf (DE); Hafer, Jörg, 21397 Barendorf (DE)
(74) Vertreter: Siemons, Norbert

(57) **Zusammenfassung**

Grillvorrichtung für Anbringung in einer Platte mit
- einem zylindrischen Körper (2) zum Einsetzen in ein kreisrundes Loch (23) der Platte (22), der am Außenumfang einen radial nach außen vorstehenden Ringflansch (3) zum Abstützen an der Oberseite der Platte (22) und am Innenumfang mindestens einen radial nach innen vorstehenden Vorsprung (4) aufweist,
- einem auf den radial nach innen vorstehenden Vorsprung (4) aufgelegten, kreisrunden Grillgitter und
- einer mit dem zylindrischen Körper (2) verbundenen, mit ihrer aktiven Heizzone unterhalb des Grillgitters angeordneten Heizvorrichtung (13,30,36).

## Beschreibung

Die Erfindung bezieht sich auf eine Grillvorrichtung für Anbringung in einer Platte.

Bekannt sind mobile Grillvorrichtungen mit einem Fuß, einem darauf angeordneten, oben offenen Behältnis zur Aufnahme von Grillkohle und einem darauf angeordneten Grillgitter. Diese Vorrichtungen werden im Garten in einem Abstand von Eßtisch und Stühlen aufgestellt. Infolgedessen muß eine Person zur Bedienung der Grillvorrichtung und zum Transport der fertigen Grillware zum Eßtisch abgestellt werden.

Davon ausgehend liegt der Erfindung die Aufgabe zugrunde, eine Grillvorrichtung zur Verfügung zu stellen, die bedienungsfreundlicher ist.

Die Aufgabe wird durch eine Grillvorrichtung mit den Merkmalen des Anspruches 1 gelöst. Vorteilhafte Ausgestaltungen der Grillvorrichtung sind in den Unteransprüchen angegeben.

Die erfindungsgemäße Grillvorrichtung für Anbringung in einer Platte hat
- einen zylindrischen Körper zum Einsetzen in ein kreisrundes Loch der Platte, der am Außenumfang einen radial nach außen vorstehenden Ringflansch zum Abstützen an der Oberseite der Platte und am Innenumfang mindestens einen radial nach innen vorstehenden Vorsprung aufweist,
- ein auf den radial nach innen vorstehenden Vorsprung aufgelegtes, kreisrundes Grillgitter und
- eine mit dem zylindrischen Körper verbundene, mit ihrer aktiven Heizzone unterhalb des Grillgitters angeordnete Heizvorrichtung.

Dadurch, daß die erfindungsgemäße Grillvorrichtung einen zylindrischen Körper mit einem Ringflansch hat, ist sie in ein kreisrundes Loch einer Platte einhängbar. Zugleich schirmt der zylindrische Körper die Platte bzw. eine damit verbundene Einrichtung von der Heizvorrichtung ab. Mittels der aktiven Zone ist auf dem Grillgitter plazierbares Grillgut erwärmbar. Dabei ist das Grillgut etwa auf dem Niveau der Oberseite der Platte bzw. etwa darüber oder darunter plazierbar. Somit ist die Grillvorrichtung von einer oder mehreren Personen betätigbar, die sich in der Nähe der Platte aufhalten. Die Platte ist z.B. die Abdeckplatte einer Anrichte, eines Büfetts, einer Theke oder eine Tischplatte eines Tisches, an dem mehrere Personen sitzen und essen können. Das Grillen kann dann bequem vor dem oder beim Essen stattfinden. Dabei können die beteiligten Personen den interessanten Grillvorgang beobachten bzw. auf die Zubereitung direkt Einfluß nehmen.

Zugleich kann der zylindrische Körper die Beine am Tisch sitzender Personen vor der Hitze der Heizvorrichtung schützen. Andererseits kann die Heizvorrichtung über den zylindrischen Körper an diese Personen Wärme abgeben, was besonders bei absinkenden Temperaturen z.B. in der Nacht angenehm ist. Ferner deckt der zylindrische Körper mit der Bodenplatte die Heizvorrichtung nach außen ab und ist besonders formschön. Die Grillvorrichtung ist sowohl in speziell dafür hergerichtete als auch in vorhandene Tische oder sonstige Einrichtungen, die mit einem entsprechenden kreisrunden Loch versehen sind, einsetzbar. Auch die Einsetzbarkeit der Grillvorrichtung in einen fest gemauerten Tisch oder Sockel mit einem entsprechenden kreisrunden Loch ist von der Erfindung einbezogen. Zum Transport eines Tisches oder einer sonstigen Einrichtung und/oder zum Vorbereiten und/oder Säubern der Grillvorrichtung ist diese einfach aus dem Loch der Platte herausnehmbar.

Gemäß einer Ausgestaltung ist der Ringflansch am oberen Rand des zylindrischen Körpers angeordnet. Dies ermöglicht eine im wesentlichen fluchtende Ausrichtung des Grillgitters mit der Oberfläche der Platte.

Gemäß einer Ausgestaltung sind die radial nach innen vorstehenden Vorsprünge zylindrische Stifte. Diese Ausbildung ist vorteilhaft für Herstellung und Anwendung. Insbesondere behindern die Stifte die Aufwärmung des Grillgutes bis zum Rand des Grillgitters praktisch nicht.

Gemäß einer Ausgestaltung ist der zylindrische Körper unten durch eine kreisringscheibenförmige Bodenplatte abgeschlossen, unter dem zentralen Bodenloch der Bodenplatte ein Aschekasten angeordnet und umfaßt die Heizvorrichtung einen in den zylindrischen Körper eingesetzten Kohletopf zur Aufnahme von Grillkohle mit einem perforierten Boden oberhalb des Bodenloches und mit einer unterhalb des Grillgitters angeordneten oberen Öffnung. Die solchermaßen ausgeführte Grillvorrichtung ist besonders vorteilhaft für das Heizen mit Grillkohle oder anderem geeigneten Brennmaterial. Der Kohletopf, bei dem es sich um ein zur Aufnahme der Grillkohle bestimmtes, topfförmiges Behältnis handelt, ist einfach in den zylindrischen Körper einsetzbar, wobei er vor dem Einsetzen oder im eingesetzten Zustand mit Grillkohle befüllbar ist. Die für die Verbrennung der Grillkohle benötigte Luft wird durch das Bodenloch der Bodenplatte und den perforierten Boden des Kohletopfes zugeführt. Die aktive Heizzone dieser Heizvorrichtung ist gebildet von der oberen, auf das Grillgitter ausgerichteten Öffnung des Kohletopfes, durch die die entzündete Grillkohle auf das Grillgut auf dem Grillgitter wirkt. Bei Benutzung wird der Kohletopf durch den zylindrischen Körper von der Platte, einem Tisch oder einer sonstigen Einrichtung und den Anwendern thermisch abgeschirmt. Die bei der Verbrennung anfallende Asche fällt durch den perforierten Boden in den Aschekasten. Nach Benutzung ist der Kohletopf zur Entleerung und Reinigung einfach aus dem zylindrischen Körper entnehmbar. Der Aschekasten ist gesondert entleerbar.

Gemäß einer Ausgestaltung weist der Aschekasten eine einstellbare Blende zum Einstellen der Zuluft auf. Durch Verstellen der Blende ist die Verbrennung der Grillkohle und damit die Hitzeeinwirkung auf das Grillgut kontrollierbar.

Gemäß einer Ausgestaltung umfaßt der Aschekasten eine unterhalb der Bodenplatte angeordnete Schubladenführung und eine darin verschieblich angeordnete, zur Bodenplatte hin offene Ascheschublade, die in eingeschobener Lage das Bodenloch unterfängt. Die Ascheschublade ermöglicht ein einfaches Entleeren und Reinigen durch Herausziehen aus der Schubladenführung.

Gemäß einer Ausgestaltung ist die Blende zum Einstellen der Zuluft in der Frontplatte der Ascheschublade angeordnet. Dies ist vorteilhaft für die Herstellung und vereinfacht die Bedienung.

Die Erfindung bezieht Ausgestaltungen ein, bei denen der Kohletopf z.B. an einem außen vorstehenden Rand auf dem nach innen vorstehenden Vorsprung des zylindrischen Körpers plaziert ist. Gemäß einer anderen Ausgestaltung ist der Kohletopf auf der Oberseite der Bodenplatte abgestützt. Gemäß einer weiteren Ausgestaltung weist der Kohletopf am Boden mindestens einen nach unten vorstehenden Vorsprung zum Abstützen auf der Oberseite der kreisringscheibenförmigen Bodenplatte auf. Durch diese Abstützung wird der Wärmeübergang vom Kohletopf auf die Bodenplatte reduziert, so daß der Wärmetransport zur Bodenplatte und zum zylindrischen Körper reduziert ist.

Gemäß einer Ausgestaltung weist der Kohletopf einen vom Boden nach unten vorstehenden, zylindrischen Kragen auf, dessen Außendurchmesser den Innendurchmesser des Bodenloches geringfügig unterschreitet und der in dieses einsetzbar ist. Hierdurch wird der Kohletopf im zylindrischen Körper zentriert und mit der oberen Öffnung auf das Grillgitter ausgerichtet.

Gemäß einer Ausgestaltung weist der Kohletopf nach außen vorstehende Griffe auf. Dies erleichtert das Einsetzen in den und Entnehmen aus dem zylindrischen Körper.

Gemäß einer Ausgestaltung weist die Heizvorrichtung einen Gastopf und eine darin eingesetzte Gasflasche mit einem darauf aufgesetzten Gasbrenner auf, wobei der Gastopf über mindestens ein Verbindungselement mit dem zylindrischen Körper verbunden ist, so daß der Gasbrenner unterhalb des Grillgitters angeordnet ist. Bei dieser Ausgestaltung ist die Heizvorrichtung durch die Gasflasche mit dem darauf aufgesetzten Gasbrenner gebildet, die in dem Gastopf auf das Grillgitter ausgerichtet ist. Der Gastopf ist z.B. mit dem zylindrischen Körper lösbar oder dauerhaft verbunden, so daß der zylindrische Körper mit dem Gastopf als Einheit in das Loch der Platte einsetzbar ist. Vorher oder nachher ist die Gasflasche mit dem aufgesetzten Gasbrenner in den Gastopf und/oder das Grillgitter auf den radial vorstehenden Vorsprung aufsetzbar. Die Zuluft ist durch Öffnungen zwischen Verbindungselementen, Gastopf und zylindrischem Körper zuführbar. Der zylindrische Körper ist z.B. so ausgeführt, daß er ein Entzünden und Regulieren der Gasflamme durch einen seitlichen Zugang unterhalb der Platte ermöglicht.

Gemäß einer Ausgestaltung ist der Gastopf über mehrere Streben mit dem zylindrischen Körper verbunden. Dies begünstigt eine Fertigung unter geringem Materialeinsatz und einen Luftzugang durch die Zwischenräume zwischen den Verbindungselementen.

Gemäß einer Ausgestaltung umfaßt die Heizvorrichtung eine Elektroheizung, die lösbar oder fest mit dem zylindrischen Körper verbunden ist. Die Elektroheizung ist gemeinsam mit dem zylindrischen Körper in das Loch der Platte einsetzbar. Ein elektrisches Versorgungskabel ist z.B. durch eine untere Öffnung des zylindrischen Körpers oder ein Bodenloch einer damit verbundenen Bodenplatte zuführbar.

Gemäß einer Ausgestaltung ist die Elektroheizung in einer kreisrunden Schale angeordnet, die mit einem seitlich vorstehenden Rand auf dem radial nach innen vorstehenden Vorsprung aufgelegt ist und auf deren Rand das Grillgitter abgelegt ist. Diese Elektroheizung ist z.B. bei einer Grillvorrichtung einsetzbar, die auch für die Aufnahme eines Kohletopfes vorbereitet ist, so daß der Anwender zwischen Heizung mittels Grillkohle und Elektroheizung wählen kann.

Gemäß einer Ausgestaltung ist/sind der zylindrische Körper und/oder die Bodenplatte und/oder das Grillgitter und/oder der Kohletopf und/oder der Gastopf und/oder die Streben und/oder die Schale aus Edelstahl. Die Ausführung aus Edelstahl ist hygienisch vorteilhaft, thermisch besonders widerstandsfähig und optisch besonders ansprechend.

Gemäß einer Ausgestaltung betrifft die Erfindung einen Grilltisch mit einem Untergestell und einer darauf angeordneten Tischplatte mit einem kreisrunden Loch und einer darin mit dem zylindrischen Körper eingesetzten und mit dem Ringflansch auf der Tischplatte aufliegenden Grillvorrichtung nach einer der vorbeschriebenen Ausführungen.

Gemäß einer Ausgestaltung hat der Grilltisch eine kreisrunde Tischplatte mit dem Loch im Zentrum der Tischplatte.

Gemäß einer Ausgestaltung ist die Tischplatte aus Stein und damit unempfindlich gegenüber Wärmezufuhr durch die Heizvorrichtung bzw. als Wärmespeicher nutzbar.

Gemäß einer Ausgestaltung hat die Tischplatte einen Durchmesser im Bereich von 1,2 bis 1,7 m. In diesem Durchmesserbereich können mehrere Personen an der Tischplatte Platz nehmen, die zentral angeordnete Grillvorrichtung leicht bedienen und sind keiner übermäßigen Wärmeabgabe der Heizvorrichtung ausgesetzt. Bevorzugt hat die Tischplatte einen Durchmesser von etwa 1,5 m.

Nachfolgend wird die Erfindung anhand der anliegenden Zeichnungen von Ausführungsbeispielen näher erläutert. In den Zeichnungen zeigen:
- Fig. 1: zylindrischer Körper mit Bodenplatte und Schubladenführung in Draufsicht;
- Fig. 2: derselbe zylindrische Körper mit Bodenplatte und Schubladenführung in einem Vertikalschnitt;
- Fig. 3: derselbe zylindrische Körper mit Bodenplatte, Schubladenführung und eingesetzter Schublade in einem um 90° gedrehten Vertikalschnitt;
- Fig. 4: Kohletopf derselben Grillvorrichtung in einer Draufsicht;
- Fig. 5: derselbe Kohletopf in einem Vertikalschnitt;
- Fig. 6: Grillvorrichtung gemäß Fig. 1 bis 5 eingesetzt in einen Grilltisch in einem Vertikalschnitt;
- Fig. 7: Grilltisch von Fig. 6 in der Draufsicht;
- Fig. 8: Grillvorrichtung für Gasflasche mit Gasbrenner in der Draufsicht;
- Fig. 9: dieselbe Grillvorrichtung mit eingesetzter Gasflasche und Gasbrenner in einem Vertikalschnitt;
- Fig. 10: Grillvorrichtung mit Elektroheizung in einem Vertikalschnitt.

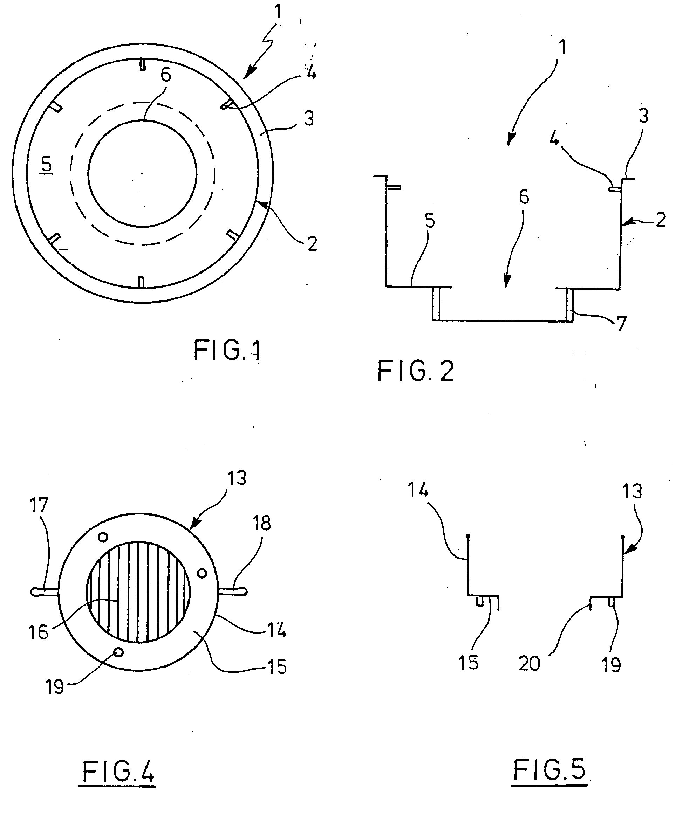

Eine erste Grillvorrichtung 1 weist gemäß Fig. 1 und 2 einen zylindrischen Körper 2 mit einem radial nach außen vorstehenden Ringflansch 3 am oberen Rand und mehreren radial nach innen vorstehenden Vorsprüngen 4 in Form von zylindrischen Stiften etwas unterhalb des oberen Randes auf. Der zylindrische Körper 2 ist unten von einer kreisringscheibenförmigen Bodenplatte 5 mit einem zentralen Bodenloch 6 abgeschlossen.

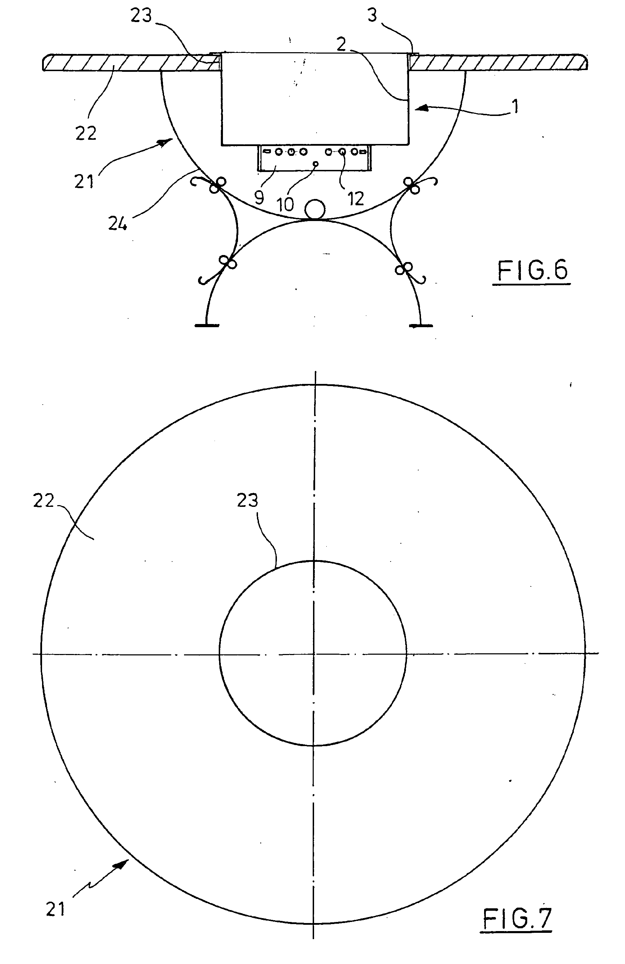

An der Unterseite der Bodenplatte 5 ist eine Schubladenführung 7 vorhanden, die es gemäß Fig. 3 ermöglicht, eine Ascheschublade 8 genau unter das Bodenloch 6 zu schieben. Die Ascheschublade 8 hat eine Frontplatte 9 mit einem Bedienknauf 10. In die Frontplatte 9 ist eine einstellbare Blende 11 integriert. Diese weist mehrere Löcher auf, denen komplementäre Löcher 12 in der Frontplatte 9 zugeordnet sind (vgl. Fig. 6). Durch Verschieben der Blende 11 in der Ebene der Frontplatte 9 ist es möglich, die Löcher 12 in der Frontplatte 9 und der Blende 11 mehr oder weniger zur Deckung zu bringen, so daß ein mehr oder weniger großer Luftdurchgang frei wird.

Ferner umfaßt diese Grillvorrichtung 1 einen Kohletopf 13 mit einem zylindrischen Mantel 14 und einem Boden 15, in dem eine Perforation 16 vorhanden ist. Die Perforation 16 ist z.B. als Lochung des Bodens 15 ausgebildet oder als an den Boden 15 integriertes Gitter.

Vom Mantel 14 stehen auf gegenüberliegenden Seiten nach außen Griffe 17, 18 vor.

Von der Unterseite des Bodens 15 stehen axial gerichtete Stifte 19 vor. Ferner ist ein nach unten vorstehender, zylindrischer Kragen 20 vorhanden.

Der Kohletopf 13 ist in den zylindrischen Körper 2 einsetzbar, so daß die axial gerichteten Stifte 19 auf der Bodenplatte 5 aufsitzen und der Kragen 20 mit geringem Spiel in das Bodenloch 6 eingreift. Ferner ist ein - nicht gezeigtes - Grillgitter von oben auf die nach innen vorstehenden Vorsprünge 4 aufsetzbar.

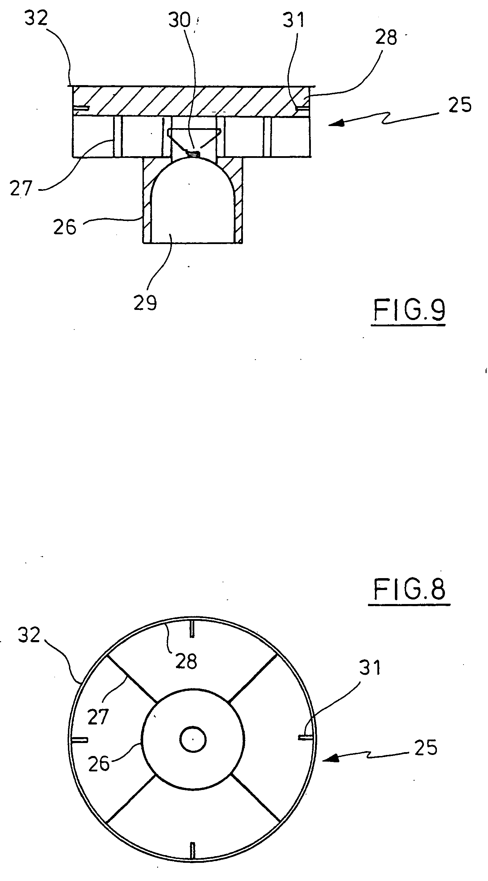

Gemäß Fig. 6 und 7 hat ein Tisch 21 eine kreisrunde Tischplatte 22 mit einem zentralen Loch 23. Die Tischplatte 22 ist auf einem Fuß 24 fixiert. Der Durchmesser des Loches 23 übersteigt geringfügig den Durchmesser des zylindrischen Körpers 2.

Gemäß Fig. 6 ist die Grillvorrichtung 1 von oben in das Loch 23 eingesetzt, so daß der umlaufende Ringflansch 3 auf der Oberseite der Tischplatte 22 aufsitzt.

Vor oder nach dem Einsetzen des zylindrischen Körpers 2 in die Tischplatte 22 ist der Kohletopf 13 in den zylindrischen Körper 2 einsetzbar, wie oben beschrieben. Außerdem wird die Ascheschublade 8 eingesetzt. Der Kohletopf 13 wird mit Holzkohle befüllt und das Grillgitter wird auf die Vorsprünge 4 aufgelegt. Nach Entzünden der Holzkohle kann Grillgut aufgelegt werden. Die Bedienung kann durch Personen erfolgen, die am Tisch 21 Platz nehmen. Die Hitze ist durch Regulierung der Blende 11 steuerbar.

Nach Benutzung ist der Kohletopf 13 und die Ascheschublade 8 bzw. die gesamte Grillvorrichtung 1 leicht aus dem Tisch 21 entnehmbar zu Zwecken der Entleerung und Reinigung.

Gemäß Fig. 8 und 9 umfaßt eine zweite Grillvorrichtung 25 mit einer Gasheizung einen Gastopf 26, der mittels mehrerer Streben 27 an einem zylindrischen Körper 28 fixiert ist, der kürzer als gemäß obigem Ausführungsbeispiel ausgeführt ist. Die Streben 27 verlaufen ausgehend vom oberen Rand des Gastopfes 26 zunächst in radialer Richtung und sind von Fortsetzung der Mantelfläche des zylindrischen Körpers 28 axial abgebogen und mit dem unteren Rand des zylindrischen Körpers 28 verbunden.

In den Gastopf 26 ist eine Gasflasche 29 mit einem an der Oberseite fixierten Gasbrenner 30 eingesetzt. Der Gasbrenner 30 hat einen geeigneten Abstand von einem auf radial nach innen vorstehende Vorsprünge 31 des zylindrischen Körpers 28 aufsetzbaren Grillgitter. Die Grillvorrichtung 25 ist wie die Grillvorrichtung 1 in das Loch 23 der Tischplatte 22 einhängbar, wobei der Ringflansch 32 auf der Tischplatte 22 aufsitzt. Der Gasbrenner 30 ist von der Unterseite und/oder der Oberseite der Tischplatte 22 aus entzündbar und regulierbar. Die Zuluft kann durch die Freiräume zwischen dem Gastopf 26, den Streben 27 und dem zylindrischen Körper 28 eintreten.

Ein Auswechseln der Gasflasche 29 ist leicht durch Entnehmen aus dem Gastopf 26 durch die obere Öffnung des zylindrischen Körpers 28 möglich.

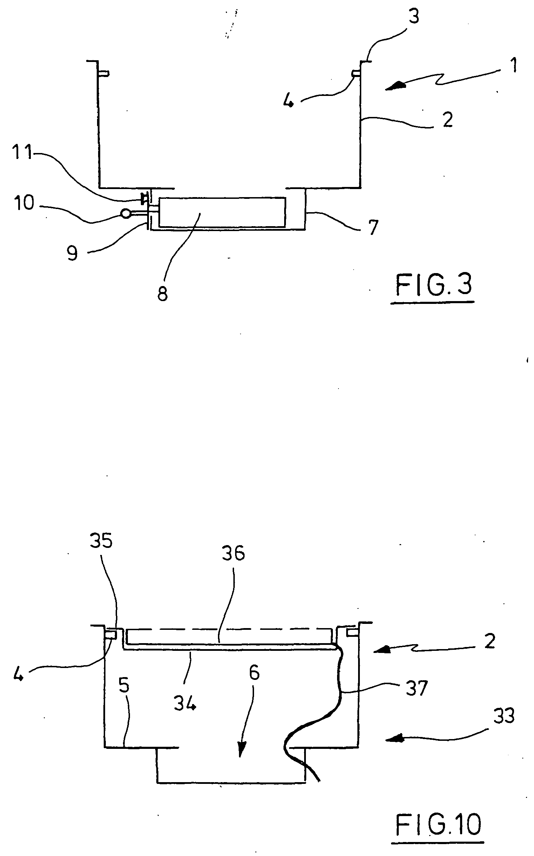

Gemäß Fig. 10 weist eine dritte Grillvorrichtung 33 eine kreisrunde Schale 34 mit einem nach außen vorstehenden Rand 35 auf, in der eine Elektroheizung 36 angeordnet ist. Ein elektrisches Anschlußkabel 37 ist von der Unterseite der Schale 34 weggeführt.

Die Schale 34 ist mit dem Rand 35 auf die radialen Vorsprünge 4 des zylindrischen Körpers 2 von Fig. 1 und 2 aufgesetzt. Das elektrische Anschlußkabel 37 ist durch das Bodenloch 6 nach unten herausgeführt.

Diese Grillvorrichtung 33 ist ebenfalls in ein Loch 23 der Tischplatte 22 von oben einsetzbar, so daß der Ringflansch 3 auf der Oberseite der Tischplatte 22 aufsitzt. Das elektrische Anschlußkabel 37 wird von unten an die Tischplatte 22 herangeführt. Auf die Oberseite des Randes 35 wird ein Grillgitter aufgelegt und die Grillware obendrauf plaziert.

## Patentansprüche

1. Grillvorrichtung für Anbringung in einer Platte mit
- einem zylindrischen Körper (2) zum Einsetzen in ein kreisrundes Loch (23) der Platte (22), der am Außenumfang einen radial nach außen vorstehenden Ringflansch (3) zum Abstützen an der Oberseite der Platte (22) und am Innenumfang mindestens einen radial nach innen vorstehenden Vorsprung (4) aufweist,
- einem auf den radial nach innen vorstehenden Vorsprung (4) aufgelegten, kreisrunden Grillgitter und
- einer mit dem zylindrischen Körper (2) verbundenen, mit ihrer aktiven Heizzone unterhalb des Grillgitters angeordneten Heizvorrichtung (13, 30, 36).

2. Grillvorrichtung nach Anspruch 1, bei der der Ringflansch (3) am oberen Rand des zylindrischen Körpers (2) angeordnet ist.

3. Grillvorrichtung nach Anspruch 1 oder 2, bei der die radial nach innen vorstehenden Vorsprünge (4) zylindrische Stifte sind.

4. Grillvorrichtung nach einem der Ansprüche 1 bis 3, bei der der zylindrische Körper (2) unten durch eine kreisringscheibenförmige Bodenplatte (5) abgeschlossen ist, unter dem zentralen Bodenloch (6) der Bodenplatte (5) ein Aschekasten (8) angeordnet ist und die Heizvorrichtung einen in den zylindrischen Körper (2) eingesetzten Topf (13) zur Aufnahme von Grillkohle umfaßt, der mit einem perforierten Boden (16) oberhalb des Bodenloches (6) und mit einer oberen Öffnung unterhalb des Grillgitters angeordnet ist.

5. Grillvorrichtung nach Anspruch 4, bei der der Aschekasten (8) eine einstellbare Blende (11) zum Einstellen der Zuluft aufweist.

6. Grillvorrichtung nach Anspruch 4 oder 5, bei der der Aschekasten (8) eine unterhalb der Bodenplatte (5) angeordnete Schubladenführung (7) und eine darin verschieblich angeordnete, zur Bodenplatte (5) hin offene Ascheschublade (8) umfaßt, die in eingeschobener Lage das Bodenloch (6) unterfängt.

7. Grillvorrichtung nach Anspruch 5 und 6, bei der die Blende (11) in einer Frontplatte (9) der Ascheschublade (8) angeordnet ist.

8. Grillvorrichtung nach einem der Ansprüche 4 bis 7, bei der der Kohletopf (13) auf der Oberseite der Bodenplatte (5) aufsitzt.

9. Grillvorrichtung nach einem der Ansprüche 4 bis 8, bei der der Kohletopf (13) am Boden (15) mindestens einen nach unten vorstehenden Vorsprung (19) zum Abstützen auf der Oberseite der kreisringförmigen Bodenplatte (5) aufweist.

10. Grillvorrichtung nach einem der Ansprüche 4 bis 9, bei der der Kohletopf (13) einen vom Boden (15) nach unten vorstehenden zylindrischen Kragen (20) aufweist, dessen Außendurchmesser den Innendurchmesser des Bodenloches (6) geringfügig unterschreitet und der in dieses einsetzbar ist.

11. Grillvorrichtung nach einem der Ansprüche 4 bis 10, bei der Kohletopf (13 nach außen vorstehende Griffe (17, 18) aufweist.

12. Grillvorrichtung nach einem der Ansprüche 1 bis 3, bei der die Heizvorrichtung einen Gastopf (26) und eine darin eingesetzte Gasflasche (29) mit einem darauf aufgesetzten Gasbrenner (30) aufweist, wobei der Gastopf (26) über mindestens ein Verbindungselement (27) mit dem zylindrischen Körper (28) verbunden ist, so daß der Gasbrenner (30) unterhalb des Grillgitters angeordnet ist.

13. Grillvorrichtung nach Anspruch 12, bei der der Gastopf (26) über mehrere Streben (27) mit dem zylindrischen Körper (28) verbunden ist.

14. Grillvorrichtung nach einem der Ansprüche 1 bis 3, bei der die Heizvorrichtung eine Elektroheizung (36) umfaßt, die mit dem zylindrischen Körper (2) verbunden ist.

15. Grillvorrichtung nach Anspruch 14, bei der die Elektroheizung (36) in einer kreisrunden Schale (34) angeordnet ist, die mit einen seitlich vorstehenden Rand (35) auf dem radial nach innen vorstehenden Vorsprung (4) aufgelegt ist und auf deren Rand das Grillgitter abgelegt ist.

16. Grillvorrichtung nach einem der Ansprüche 1 bis 15, bei der der zylindrische Körper (2) und/oder die Bodenplatte (5) und/oder das Grillgitter und/oder der Kohletopf (13) und/oder der Gastopf (26) und/oder die Streben (27) und/oder die Schale (34) aus Edelstahl ist/sind.

17. Grilltisch mit einem Untergestell (24) und einer darauf angeordneten Tischplatte (22) mit einem kreisrunden Loch (23) und einer darin mit dem zylindrischen Körper (2) eingesetzten und mit dem Ringflansch (3) auf der Tischplatte (22) aufliegenden Grillvorrichtung (1, 25, 33) nach einem der Ansprüche 1 bis 16.

18. Grilltisch nach Anspruch 17 mit einer kreisrunden Tischplatte (22) und dem Loch (23) im Zentrum der Tischplatte (22).

19. Grilltisch nach Anspruch 17 oder 18, bei dem die Tischplatte (22) aus Stein ist.

20. Grilltisch nach einem der Ansprüche 1 bis 19, bei dem die Tischplatte einen Durchmesser im Bereich von 1,2 bis 1,7 m aufweist.
